# EUROPÄISCHE PATENTSCHRIFT

(11) **EP 1 755 763 B1**
(45) Veröffentlichungstag und Bekanntmachung des Hinweises auf die Patenterteilung: **15.07.2009**
(21) Anmeldenummer: 05750824.4
(22) Anmeldetag: 10.05.2005
(51) Int. Cl.: B01D 45/04

(54) **TROPFENABSCHEIDERANORDNUNG**
DROPLET SEPARATOR SYSTEM
DISPOSITIF SEPARATEUR DE GOUTTES

(30) Priorität: 11.05.2004 DE 102004023097; 06.12.2004 DE 102004058701
(43) Veröffentlichungstag der Anmeldung: 28.02.2007
(73) Patentinhaber: Munters Euroform GmbH, 52068 Aachen (DE)
(72) Erfinder: SCHMITZ, Jürgen, 52070 Aachen (DE); WANDRES, Peter, 52066 Aachen (DE)
(74) Vertreter: Hauck Patent- und Rechtsanwälte
(86) Internationale Anmeldenummer: PCT/DE2005/000861
(87) Internationale Veröffentlichungsnummer: WO 2005/110579

(56) Entgegenhaltungen:
- DE-A1- 2 714 429
- DE-C- 598 475
- US-A- 4 061 478
- US-A- 4 738 698
- PATENT ABSTRACTS OF JAPAN Bd. 1997, Nr. 08, 29. August 1997 (1997-08-29) & JP 09 096209 A (TENETSUKUSU:KK), 8. April 1997 (1997-04-08)

## Beschreibung

Die vorliegende Erfindung betrifft eine Tropfenabscheideranordnung mit den Merkmalen des Oberbegriffs von Patentanspruch 1.

Derartige Tropfenabscheideranordnungen sind bekannt und werden zur allgemeinen Zufriedenheit verwendet. Insbesondere bei hohen Strömungsgeschwindigkeiten oder hohen Staudrücken können jedoch bei derartigen Tropfenabscheideranordnungen, obwohl die Profile an sich von der Abscheideleistung her für derartige hohe Strömungsgeschwindigkeiten und Staudrücke geeignet sind, durch das verwendete Rahmensystem Probleme auftreten. Solche Probleme werden insbesondere durch den Wannenbereich am unteren Rahmenende hervorgerufen, da durch die sehr hohen Strömungsgeschwindigkeiten ein Mitriß der im Wannenbereich gesammelten Flüssigkeit bzw. des entsprechenden Feststoffs erfolgen kann. Um einen derartigen Mitriß zu vermeiden, hat man bereits den Wannenbereich unterhalb der Bodenwand des Strömungskanals angeordnet, so daß bei laminaren Strömungsbedingungen der Wannenbereich an sich vom strömenden Medium überhaupt nicht tangiert werden dürfte. In der Praxis gelangt jedoch ein gewisser Teil der Strömung in den Wannenbereich hinein und taucht am Ende des Wannenbereiches aus diesem wieder auf, wobei durch die entsprechende Aufwärtsströmung der bereits erwähnte Mitriß verursacht wird. Obwohl daher die Tropfenabscheiderprofile als solche von der Abscheideleistung her durchaus für derart hohe Strömungsgeschwindigkeiten geeignet sind, wird diese Leistung durch die wieder von der Strömung aufgenommenen Flüssigkeit- bzw. Feststoffpartikel insgesamt reduziert oder ein Teil der Abscheideleistung wird wieder zunichte gemacht.

Bei derartigen Hochgeschwindigkeitsanwendungen ist daher die Abscheideleistung nicht mehr in erster Linie von der Ausbildung des speziellen Abscheideprofils abhängig, sondern von der Gesamtkonfiguration der Tropfenabscheideranordnung, beispielsweise der Anordnung oder Ausgestaltung von deren Wannenbereich.

Um solche Mitrißprobleme aus dem Wannenbereich zu vermeiden, könnte man das Maß, mit dem die Tropenabscheideranordnung den Strömungskanal nach unten überragt (Höhe des Wannenbereiches) vergrößern, um den Abstand des Flüssigkeits/Feststoffspiegels im Wannenbereich bis zur Bodenwand des Strömungskanals zu vergrößern. Dies hat jedoch den Nachteil, daß die Tropfenabscheideranordnung bzw. der entsprechende Rahmen besonders groß ausgebildet werden muß, was erhöhte Materialkosten und einen erhöhten Platzbedarf mit sich bringt.

Desweiteren besitzen derartige Rahmen einen von der Deckplatte gebildeten Kappenbereich und einen Seitenbereich, die sich ebenfalls über den Querschnitt des Strömungskanals hinaus erstrecken können. Auch in diesen Bereichen können Probleme auftreten, wobei hier insbesondere Leckageprobleme auftreten können, wenn die Strömung mit hoher Geschwindigkeit in diese Bereiche gelangt. Auch hierdurch wird die Abscheideleistung der Tropenabscheideranordnung beeinträchtigt.

Aus der DE 2714429 ist eine Tropfenabscheideranordnung mit den Merkmalen des Oberbegriffes des Patentanspruches 1 bekannt. Bei der in dieser Veröffentlichung in Figur 2 gezeigten Ausführungsform ist ein Schott (dort als Wehr bezeichnet) vorgesehen, das im Wannenbereich angeordnet ist. Dieses Schott ist jedoch in Strömungsrichtung hinter dem Trennplattenpaket (Tropfenabscheiderprofilpaket) angeordnet. Gemäß der Lehre dieser Veröffentlichung ist dies auch zwingend. Es wird erwähnt, dass aufgrund der Tatsache, dass das Wehr einen Abstand in Strömungsrichtung hinter den Enden der Trennplatten wahrt, der Anstieg der Stromlinien nicht beginnt, bevor diese die Hinterkanten der Platten freigegeben haben. Dieser Effekt kann aber nur dann erreicht werden, wenn das Schott bzw. Wehr in Strömungsrichtung hinter dem Trennplattenpaket (Tropfenabscheiderprofilpaket) angeordnet ist.

Die in Figur 3 dieser Veröffentlichung gezeigte Ausgestaltung besitzt eine dem Trennplattenpaket vorgeschaltete Platte. Diese Platte befindet sich nicht im Wannenbereich und darüber hinaus ebenfalls nicht im Trennplattenpaketbereich (Tropfenabscheiderprofilpaketbereich).

Der vorliegenden Erfindung liegt die Aufgabe zugrunde, eine Tropfenabscheideranordnung der eingangs beschriebenen Art zu schaffen, die sich insgesamt durch eine besonders hohe Abscheideleistung bei vergleichsweise geringer Baugröße auszeichznet.

Diese Aufgabe wird erfindungsgemäß bei einer Tropfenabscheideranordnung der angegebenen Art durch die kennzeichnenden Merkmale von Patentanspruch 1 gelöst. Mit der erfindungsgemäßen Lösung wird eine Maßnahme getroffen, die verhindert, daß die eigentliche Abscheideleistung der Tropfenabscheiderprofile durch Probleme der Gesamtkonfiguration der Tropfenabscheideranordnung wieder reduziert wird. Mit anderen Worten, durch die erfindungsgemäßen Maßnahme läßt sich die zulässige Anströmungsgeschwindigkeit bei derartigen Tropfenabscheideranordnungen erhöhen.

Die erfindungsgemäße Maßnahme betrifft die Erhöhung des Strömungswiderstandes. Eine derartige Einrichtung ist im Wannenbereich und im Tropfenabscheiderprofilbereich vorgesehen, um in bezug auf Strömungsanteile, die in diese Bereiche gelangen, eine Stauwirkung zu erzeugen und auf diese Weise die Strömungsgeschwindigkeit in diesen Bereichen zu erniedrigen, um einen Mitriß oder Leckagen zu verhindern.

Wie bereits erwähnt, ist die erfindungsgemäß ausgebildete Tropfenabscheideranordnung insbesondere für Systeme mit hohen Strömungsgeschwindigkeiten und hohem Staudruck geeignet, da bei diesen Systemen die vorstehend aufgezeigten Probleme verstärkt auftreten. Erfindungsgemäß wird dabei verhindert, daß die an sich gute Abscheideleistung der Tropfenabscheider durch die vorstehend aufgezeigten Probleme des Systems wieder reduziert wird. Solche Anwendungsfälle, für die die Erfindung besonders geeignet ist, sind beispielsweise Verbrennungsmotoren, insbesondere Dieselmotoren, aber auch Kompressoren und viele anderen Einsatzgebiete, insbesondere im Bereich der Chemie, im Erdgasbereich etc.. Mit der erfindungsgemäßen Lösung gelingt es dabei, einen für derartige Systeme geeigneten Hochgeschwindigkeitsabscheider bzw. Hochleistungsabscheider zur Verfügung zu stellen.

Die Tropfenabscheiderprofile selbst sind für die vorliegende Erfindung nicht kritisch. Es können beliebige bekannte Profile zum Einsatz gelangen, die jedoch vorzugsweise für derartige Hochgeschwindigkeits- bzw. Hochleistungseinsätze geeignet sein sollen, um die durch die Erfindung erreichten Vorteile nicht durch eine verringerte Abscheidung der Tropfenabscheiderprofile wieder zunichte zu machen.

Durch das im Wannenbereich und im Tropfenabscheiderprofilbereich angeordnete Scholl wird der in die Wanne eintauchende Hochgeschwindigkeitsströmungsanteil gestaut, so daß es nicht oder nur in reduziertem Ausmaß zu Flüssigkeitsmitrissen kommen kann. Durch Versperrung bzw. Widerstandserhöhung wird somit die Strömungsgeschwindigkeit aus dem problematischen Bereich heraus verringert und dadurch ein Mitriß vermieden. Darüber hinaus wird durch diesen Staueffekt eine bessere Abscheidung im Bereich vor dem Schott erzielt. Desweiteren werden Leckageströmungen vermieden und problematische Geschwindigkeitsspitzen beseitigt.

Eine weitere bevorzugte Ausführungsform der Erfindung zeichnet sich dadurch aus, daß sie eine Einrichtung zur Strömungsumlenkung aufweist, die als im und/oder benachbart zum Wannen-, Kappen- und/oder Seitenbereich angeordneter Keil ausgebildet ist. Mit "Keil" ist hierbei jegliche kontinuierliche Querschnittsverengung gemeint. Vorzugsweise ist ein derartiger Keil an der Übergangsstelle zwischen dem Strömungskanal und der Tropfenabscheideranordnung vorgesehen. Hierdurch erfolgt eine Strömungsumlenkung, so daß die problematischen Bereiche von der Hochgeschwindigkeitsströmung nicht direkt beaufschlagt werden. Mögliche Geschwindigkeitsspitzen in den problematischen bzw. kritischen Bereichen werden hierdurch abgebaut bzw. reduziert. Ein solcher Keil ist vorzugsweise benachbart zum Wannenbereich der Tropfenabscheideranordnung angeordnet, um eine aufwärts gerichtete Umlenkung der aus dem Strömungskanal herrührenden Strömung zu bewirken und auf diese Weise Abtauchströmungen in den Wannenbereich hinein zu verhindern. Hierdurch wird erreicht, daß der Wannenbereich weitgehend außerhalb der Strömung liegt, damit es nicht zu Mitrissen kommt.

Bei noch einer weiteren Ausführungsform der Erfindung weist diese eine Einrichtung zur Strömungsgeschwindigkeitsreduzierung auf, die als im und/oder benachbart zum Wannen-, Kappen- und/oder Seitenbereich angeordnete Lochplatte ausgebildet ist. Eine solche Lochplatte ist vorzugsweise ebenfalls an der Übergangsstelle zwischen dem Strömungskanal und der Tropfenabscheideranordnung angeordnet. Hierdurch wird der Gasstrom so verändert, daß Geschwindigkeitsspitzen in den kritischen Bereichen vermieden bzw. Spitzen, die als Ungleichverteilung vor der Tropfenabscheideranordnung vorhanden sind, ausgeglichen werden. Desweiteren erfolgt hierdurch eine Verringerung der Geschwindigkeitsspitzen, die durch eine erfindungsgemäß vorgenommene Umlenkung der Strömung (beispielsweise über eine vorgesehenen Keil) verursacht werden. Die Lochplatte ist daher vorzugsweise an den Keil angrenzend angeordnet, um die durch die Strömungsumlenkung durch den Keil erzeugten Geschwindigkeitsspitzen wieder auszugleichen. Wenn der Keil angrenzend an den Wannenbereich angeordnet ist, befindet sich die Lochplatte vorzugsweise über dem Keil.

Je nach Anwendungsfall sind die drei vorstehend beschriebenen erfindungsgemäßen Einrichtungen zur Umlenkung, Erhöhung des Widerstandes oder Reduzierung der Geschwindigkeit der Strömung miteinander zu kombinieren und zu optimieren. Eine entsprechende Optimierung kann durch empirische Versuche unter Berücksichtigung der jeweiligen speziellen Gegebenheiten erreicht werden. So kann es beispielsweise bereits ausreichend sein, ein einziges Schott im Wannenbereich anzuordnen, um Mitrisse der abgeschiedenen Substanzen zu verhindern. Vorzugsweise findet ein derartiges Schott jedoch in Kombination mit einem benachbart zum Wannenbereich angeordneten Keil und einer darüber angeordneten Lochplatte Verwendung. Der Keil bewirkt hierbei eine Umlenkung der Strömung, so daß nur noch geringe Strömungsanteile in den Wannenbereich gelangen können. Die über dem Keil angeordnete Lochplatte reduziert die durch die Umlenkung hervorgerufenen Geschwindigkeitsspitzen, und das Schott blockiert eine noch vorhandene Aufwärtsströmung aus dem Wannenbereich heraus, die zu Mitrissen führt.

Natürlich können auch gleichzeitig mehrere Einrichtungen zur Strömungsumlenkung, zur Erhöhung des Strömungswiderstandes oder zur Strömungsgeschwindigkeitsreduzierung vorhanden sein, beispielsweise mehrere Schotts, mehrere Keile oder mehrere Lochplatten.

Das in Wannenbereich vorgesehene Scholl untertielt diesen in zwei Abteile, die vorzugsweise jeweils getrennte Abläufe besitzen.

Vorzugsweise ist das Schott in der stromab gelegenen Rahmenhälfte angeordnet. Hierdurch wird erreicht, daß durch den erzielten Strömungsstau die Abscheidung überwiegend im vorderen, d.h. stromauf gelegenen Teil des Rahmens durchgeführt wird, wodurch die stromab gelegene Rahmenhälfte entlastet wird. Eine Aufwärtskomponente der Strömung in der stromab gelegenen Rahmenhälfte wird dadurch ausgeschaltet. Dies ist besonders wichtig, da es somit in diesem kritischen Bereich nicht zu Mitrissen kommen kann, die die Abscheidungsleistung der Tropfenabscheideranordnung reduzieren.

Eine weitere Maßnahme, um solche Mitrisse zu vermeiden, besteht bei einer Tropfenabscheideranordnung, die mit Fangnasen versehene Tropfenabscheiderprofile aufweist, darin, daß der im Wannenbereich vorgesehene mindestens eine Ablauf in Strömungsrichtung hinter den Fangnasen angeordnet ist. Es ergibt sich hierdurch der Effekt, daß der im Bereich der Fangnasen (Fangtaschen) vorhandene größte Staudruck nicht in den Ablauf gelangen kann, da dieser in Strömungsrichtung hinter den Fangnasen angeordnet ist. Es entsteht somit auch keine so starke Aufwärtsströmung, die sich nachteilig auf die Strömungsverhältnisse auswirken und zu Überrissen bzw. Mitrissen führen kann.

Vorzugsweise ist der Ablauf unmittelbar hinter den Fangnasen angeordnet, um die Strecke zwischen der Stelle der größten Abscheidung und dem Ablauf möglichst gering zu halten.

Wie erwähnt, zeichnet sich eine bevorzugte Ausführungsform dadurch aus, daß das Schott den Wannenbereich in zwei Abteile mit jeweils getrennten Abläufen unterteilt. Hierbei ist zweckmäßigerweise der in Strömungsrichtung nach dem Schott vorgesehene Ablauf hinter den Fangnasen der Tropfenabscheiderprofile angeordnet. Auf diese Weise wird sichergestellt, daß im kritischen Bereich, d.h. in Strömungsrichtung hinter dem Schott, keine Mitrisse aus dem Ablauf heraus verursacht werden, da der Ablauf aus dem Bereich des größten Staudrucks unter den Fangnasen in Strömungsrichtung hinter die Fangnasen verlagert ist.

Bei noch einer weiteren Ausführungsform ist die Einrichtung zur Strömungsgeschwindigkeitsreduzierung als Lochplatte so ausgebildet, daß im unteren Bereich der Lochplatte eine besonders große Geschwindigkeitsreduzierung stattfindet, die nach oben hin stufenweise oder kontinuierlich abnimmt. Dies kann dadurch erreicht werden, daß die Lochplatte Löcher mit von unten nach oben zunehmendem Lochdurchmesser aufweist. Bei einer anderen Ausführungsform sind mehrere Lochplatten mit verschieden großen Löchern übereinander angeordnet, wobei vorzugsweise die Lochplatte mit den kleinsten Löchern unten angeordnet ist.

Was die Ausbildung des Schotts anbetrifft, so ist eine Ausführungsform besonders geeignet, bei der das Schott kammförmig ausgebildet ist, wobei die einzelnen Kammzinken sich von unten in die Tropfenabscheiderprofilzwischenräume erstrecken und diese im wesentlichen sperren. Bei einer anderen Ausführungsform ist das Schott von an den Tropfenabscheiderprofilen angebrachten Sperrelementen für die Abscheiderprofilzwischenräume gebildet. Diese Sperrelemente können dabei winkelförmig ausgebildet sein, um eine Anlagefläche an die Tropfenabscheiderprofile vorzusehen. Diese Anlagefläche kann an die Profile angeschweißt oder angeklebt sein. Wesentlich ist, daß bei allen Ausführungsformen die Zwischenräume bzw. Kanäle zwischen den einzelnen Profilen im wesentlichen versperrt werden.

Bei noch einer anderen Ausführungsform ist das Schott als gerade durchlaufende Platte ausgebildet, und die Tropfenabscheiderprofile sind geschlitzt ausgebildet und sitzen auf der Tropfenabscheiderplatte auf.

Die erfindungsgemäße Lehre sieht daher eine Reihe von Möglichkeiten einer Strömungslenkfunktion außerhalb der eigentlichen Tropfenabscheiderprofile vor. Sie findet vorzugsweise bei Hochleistungsabscheidern Verwendung, die beispielsweise bei Schiffsdieselmotoren, Großdieselmotoren, Kraftwerksdieselmotoren Anwendung finden.

Die Erfindung wird nachfolgend anhand eines Ausführungsbeispiels in Verbindung mit der Zeichnung im einzelnen erläutert. Es zeigen:
- Figur 1: einen schematischen Vertikalschnitt durch einen Teil eines Strömungskanals mit daran anschließender Tropfenabscheideranordnung;

- Figur 2: einen Horizontalschnitt durch den Strömungskanal mit Tropfenabscheideranordnung gemäß Figur 1;
- Figur 3: einen Horizontalschnitt durch den Strömungskanal einer anderen Ausführungsform einer Tropfenabscheideranordnung;
- Figur 4: eine schematische Draufsicht auf eine spezielle Ausführungsform eines Schotts; und
- Figur 5: eine schematische Vorderansicht einer weiteren Ausführungsform eines Schotts; und
- Figur 6: eine schematische Seitenansicht eines Schotts gemäß noch einer anderen Ausführungsform.

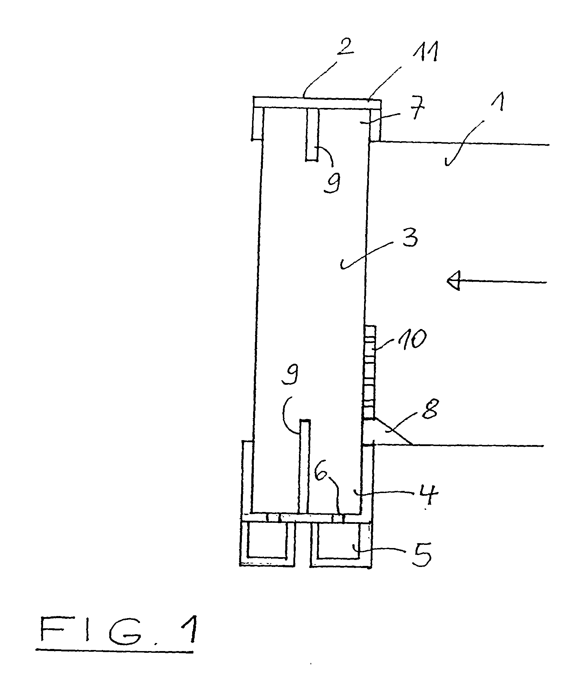

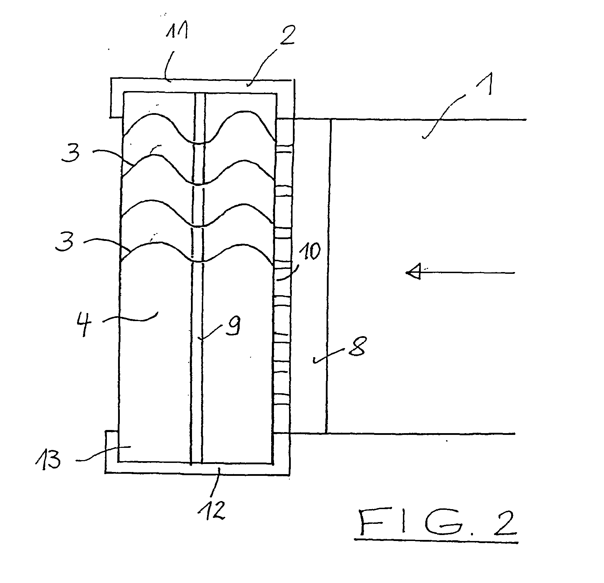

Figur 1 zeigt einen Teil eines Strömungskanals 1, durch den ein mit einer Flüssigkeit beladenes gasfömiges Medium strömt. Die Strömungsrichtung ist durch den dargestellten Pfeil angedeutet. Um die im Medium vorhandene Flüssigkeit abzuscheiden, mündet der Strömungskanal 1 in eine Tropfenabscheideranordnung 2. Diese Tropfenabscheideranordnung 2 besteht aus einem Rahmen 11, der zwei Seitenwände 12 (in Figur 2 gezeigt), einen oberen Kappenbereich 7 und einen unteren Wannenbereich 4 aufweist. Der Kappenbereich 7 befindet sich oberhalb des Strömungskanals 1, während sich der Wannenbereich 4 unterhalb des Strömungskanals befindet. Im Rahmen 11 ist eine Vielzahl von vertikal und parallel zueinander angeordneten Tropfenabscheiderprofilen 3 angeordnet, bei denen es sich um Lamellenabscheiderprofile einer bekannten Bauart handelt. Diese Tropfenabscheiderprofile sind hier nicht detailgetreeu dargestellt. Da sie bekannt sind, müssen an dieser Stelle keine weiteren Einzelheiten hiervon erläutert werden. Jedenfalls wird durch die durch die Lamellenprofile erzielten Strömungslenkungen eine Abscheidung von Flüssigkeitströpfchen erreicht, die entlang den Profilen nach unten strömen und im Wannenbereich 4 gesammelt werden. Der Wannenbereich 4 weist an seiner Bodenplatte 2 schlitzförmige Auslässe 6 auf, über die die angesammelte Flüssigkeit in darunter angeordnete Rinnen 5 gelangen kann, über die sie abgeführt wird.

Die in den Figuren 1 und 2 dargestellte Tropfenabscheideranordnung weist infolge ihrer Ausgestaltung im wesentlichen drei problematische Bereiche auf, die insbesondere bei sehr hohen Strömungsgeschwindigkeiten des im Kanal strömenden Mediums zu Abscheideproblemen führen können, d.h. die an sich durch die Tropfenabscheiderprofile erzielte gute und für die hohe Strömungsgeschwindigkeit angemessene Abscheideleistung wieder reduzieren können. Es handelt sich hierbei um den Wannenbereich 4, den Kappenbereich 7 und benachbart zu den Seitenwänden 12 angeordnete Seitenbereiche 13. In diesen Bereichen kann es, wenn Anteile des mit hoher Geschwindigkeit strömenden Gasstromes in diese Bereiche gelangen, zu Flüssigkeitsmitrissen bzw. Leckageströmen kommen, die insgesamt eine Reduzierung der Abscheideleistung bewirken.

Um diese Probleme zu vermeiden, ist an der Übergangsstelle zwischen Strömungskanal 1 und Tropfenabscheideranordnung 2 im unteren Bereich des Strömungskanals eine keilförmige Strömungsumlenkeinrichtung 8 vorgesehen, die die Strömung nach oben umlenkt und verhindert, daß Strömungsanteile in den Wannenbereich 4 gelangen. Über der keilförmigen Einrichtung 8 befindet sich eine Lochplatte 10, die zur Reduzierung der durch die Strömungsumlenkung erzeugten Strömungsgeschwindigkeitsspitzen dient. Die Lochplatte 10 bewirkt daher wieder eine Vergleichmäßigung der Strömungsgeschwindigkeit über den nunmehr reduzierten Strömungsquerschnitt durch die Tropfenabscheideranordnung. Desweiteren ist im Wannenbereich 4 ein Schott 9 vorgesehen, das den Wannenbereich etwa mittig unterteilt und von der Bodenplatte des Wannenbereiches nach oben bis etwa zur Höhe der keilförmigen Umlenkeinrichtung 8 vorsteht. Dieses Schott 9 dient zur Erhöhung des Strömungswiderstandes des in den Wannenbereich 4 trotz der Einrichtungen 8 und 10 abtauchenden Strömungsanteils und bewirkt somit, daß hierdurch keine Aufwärtsströmung mit hoher Geschwindigkeit entstehen kann, die die im Wannenbereich 4 angesammelte Flüssigkeit mitreißen kann. Ein entsprechendes Schott ist im Kappenbereich 7 vorgesehen und erstreckt sich von der Deckplatte des Rahmens ebenfalls etwa mittig nach unten eine geringe Strecke in den Querschnitt des Strömungskanals 1 hinein. Dieses Schott besitzt entsprechende Stauaufgaben im Kappenbereich.

Durch die vorgesehenen Maßnahmen wird somit eine weitgehend gleichmäßige Strömung (abgesehen von den durch die Tropfenabscheiderprofile selbst erzielten Strömungsumlenkungen) am Austritt erzielt, da ein Eindringen von Strömungsanteilen in den Wannenbereich und den Kappenbereich weitgehend vermieden wird. Bei dieser Ausführungsform sind in den Seitenbereichen 13 der Tropfenabscheideranordnung keine speziellen Maßnahmen vorgesehen. Dies kann natürlich ebenfalls der Fall sein.

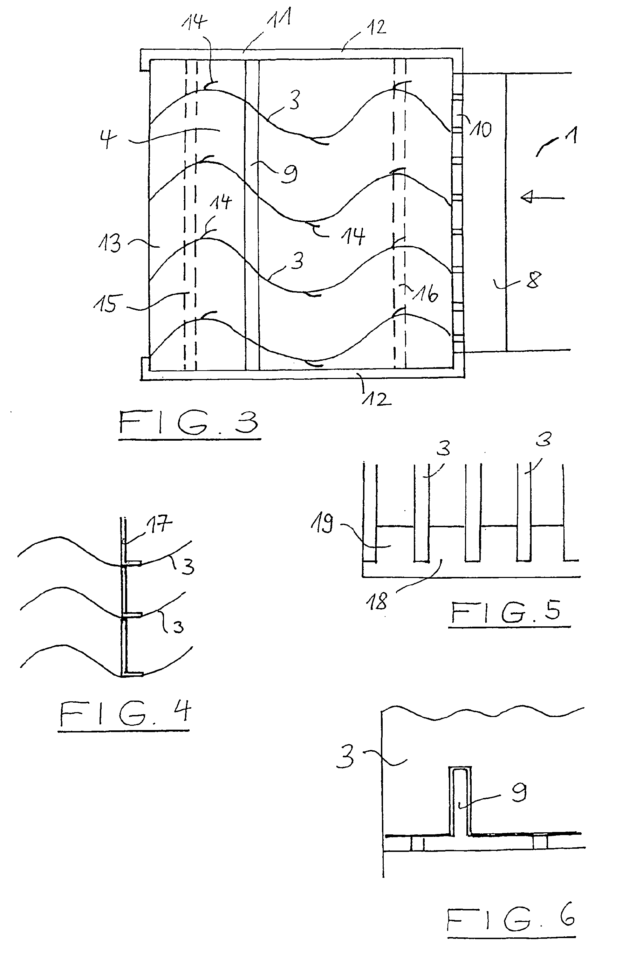

Figur 3 zeigt einen Horizontalschnitt durch den Strömungskanal einer weiteren Ausführungsform einer Tropfenabscheideranordnung. Im folgenden werden im wesentlichen nur die Teile beschrieben, mit denen sich die Anordnung von der in den Figuren 1 und 2 gezeigten Tropfenabscheideranordnung unterscheidet.

Bei der in Figur 3 gezeigten Tropfenabscheideranordnung ist der Rahmen 11 entsprechend ausgebildet wie bei der Ausführungsform der Figuren 1 und 2 und weist ebenfalls zwei Seitenwände 12, einen oberen Kappenbereich und einen unteren Wannenbereich 4 auf. Im Rahmen 11 ist eine Vielzahl von vertikal und parallel zueinander angeordneten Tropfenabscheiderprofilen 3 angeordnet, bei denen es sich um Lamellenabscheider einer bekannten Bauart handelt. Diese Tropfenabscheiderprofile sind nur schematisch dargestellt und sind lamellenförmig ausgebildet. Sie weisen an den jeweiligen Wellenbergen Fangnasen 14 auf, die sich gegen die Strömungsrichtung zunehmend öffnen, so daß Fangtaschen gebildet werden. Derartige Profile mit Fangnasen sind bekannt, so daß auf deren Funktion hier nicht mehr im Detail eingegangen werden muß.

Durch die durch die Lamellenprofile erzielten Strömungsumlenkungen wird eine Abscheidung von Flüssigkeitströpfchen erreicht, die entlang den Profilen nach unten strömen und im Wannenbereich 4 gesammelt werden. Die stärkste Abscheidung findet dabei im Bereich der Fangnasen 14 bzw. Fangtaschen statt, da hier der größte Staudruck herrscht.

Auch bei dieser Ausführungsform ist im Wannenbereich 4 ein Schott 9 vorgesehen, das ähnlich ausgebildet ist wie das Schott der Ausführungsform der Figuren 1 und 2. Dieses Schott ist jedoch im Unterschied zur Ausführungsform der Figuren 1 und 2 nicht etwa mittig im Rahmen, sondern innerhalb der stromab gelegenen Rahmenhälfte angeordnet. Durch die durch das Schott erzielte Strömungswiderstandserhöhung wird in jedem Fall vermieden, daß im stromab gelegenen, d.h. in Strömungsrichtung hinter dem Schott gelegenden Bereich, eine Aufwärtsströmung stattfindet, die zu Mitrissen führen könnte. Dieser Effekt wird noch weiter dadurch verstärkt, daß der in diesem Bereich angeordnete Ablaufschlitz 15 nicht direkt unter den Fangnasen 14 angeordnet ist, sondern sich in Strömungsrichtung hinter denselben befindet. Auf diese Weise wird der Ablaufschlitz 15 aus dem Bereich des höchsten Staudrucks heraus verlagert, was ebenfalls zur Vermeidung von Mitrissen beiträgt.

Der im stromauf gelegenen Bereich (vom Schott 9 aus gesehen) angeordnete Ablaufschlitz 16 befindet sich etwa mittig in diesem Bereich und ist unterhalb der dort angeordneten Fangnasen 14 angeordnet. In diesem Bereich, in dem die größte Abscheidung stattfindet, wird ein Abtauchen der Strömung in den Ablaufschlitz in Kauf genommen. Die hierdurch möglicherweise wieder mitgerissene Flüssigkeit wird dann in den nachfolgenden Bereichen wieder abgeschieden.

Die Figuren 4 und 5 zeigen verschiedene Ausführungsformen des Schotts 9. Bei der in Figur 4 dargestellten Ausführungsform wird das Schott von einer Vielzahl von an den Tropfenabscheiderprofilen 3 angebrachten Sperrelementen 17 gebildet, die die Abscheiderprofilzwischenräume bzw. Kanäle sperren. Die Sperrelemente sind winklig ausgebildet und liegen mit einer Fläche an den Tropfenabscheiderprofilen an, die mit den Profilen verschweißt oder verklebt sein kann.

Bei der in Figur 5 schematisch dargestellten Ausführungsform ist das Schott 18 einstückig ausgebildet und hat die Form eines Kammes, wobei sich die jeweiligen Kammzinken 19 in die Kanäle zwischen den Tropfenabscheiderprofilen 3 nach oben erstrecken. Das Schott 18 kann hierbei am Rahmen der Tropfenabscheideranordnung befestigt sein.

Bei der in Figur 6 dargestellten Ausführungsform ist das Schott 9 als gerade durchlaufende Platte abgebildet, während die Tropfenabscheiderprofile 3 geschlitzt sind und auf der Platte aufsitzen.

Abschließend ist noch darauf hinzuweisen, daß sich die Tropfenabscheiderprofile vorzugsweise bis zum Boden des Wannenbereiches 4 erstrecken.

## Patentansprüche

1. Tropfenabscheideranordnung (2) zur Anordung in oder an einem Strömungskanal (1) zur Abscheidung von Flüssigkeits- und/oder Feststoffpartikeln aus dem im Strömungskanal (1) strömenden Medium mit einem Rahmen (11) mit einer Bodenplatte, einer Deckplatte und einem zur Flüssigkeits/Feststoffsammlung und
- abführung dienenden Wannenbereich (4) am unteren Rahmenende, der tiefer angeordnet ist als die Bodenwand des Strömungskanals (1), einem Kappenbereich und einem Seitenbereich und einer vom Rahmen (11) gehaltenen Vielzahl von parallel zueinander angeordneten Tropfenabscheiderprofilen (3), wobei der Rahmen (11) mindestens eine Einrichtung zur Erhöhung des Strömungswiderstandes aufweist, die als Schott (9, 18) ausgebildet ist, das im Wannenbereich (4) angeordnet ist, **dadurch gekennzeichnet, dass** das Schott (9, 18) im Tropfenabscheiderprofilbereich angeordnet ist und die Zwischenräume bzw. Kanäle zwischen den einzelnen Tropfenabscheiderprofilen (3) im unteren Bereich im wesentlichen versperrt.

2. Tropfenabscheideranordnung nach Anspruch 1, **dadurch gekennzeichnet, dass** das Schott (9, 18) den Wannenbereich (4) in zwei Abteile mit jeweils getrennten Abläufen (6) unterteilt.

3. Tropfenabscheideranordnung nach Anspruch 1 oder 2, **dadurch gekennzeichnet, dass** das Schott (9, 18) in der stromab gelegenen Rahmenhälfte angeordnet ist.

4. Tropfenabscheideranordnung nach einem der vorangehenden Ansprüche, die mit Fangnasen (14) versehene Tropfenabscheiderprofile (3) aufweist, **dadurch gekennzeichnet, dass** der Wannenbereich (4) mindestens einen Ablauf (15) aufweist, der in Strömungsrichtung hinter den Fangnasen (14) angeordnet ist.

5. Tropfenabscheideranordnung nach Anspruch 4, **dadurch gekennzeichnet, dass** der Ablauf (15) unmittelbar hinter den Fangnasen (14) angeordnet ist.

6. Tropfenabscheideranordnung nach Anspruch 2, 4 oder 5, **dadurch gekennzeichnet, dass** der in Strömungsrichtung nach dem Schott (9, 18) vorgesehene Ablauf (15) hinter den Fangnasen (14) angeordnet ist.

7. Tropfenabscheideranordnung nach einem der vorangehenden Ansprüche, **dadurch gekennzeichnet, dass** das Schott (18) kammförmig ausgebildet ist, wobei die einzelnen Kammzinken (19) sich von unten in die Tropfenabscheiderprofilzwischenräume erstrecken und diese im wesentlichen sperren.

8. Tropfenabscheideranordnung nach einem der Ansprüche 1 bis 6, **dadurch gekennzeichnet, dass** das Schott (9) von an den Tropfenabscheiderprofilen (3) angebrachten Sperrelementen (17) für die Abscheiderprofilzwischenräume gebildet ist.

9. Tropfenabscheideranordnung nach einem der Ansprüche 1 bis 6, **dadurch gekennzeichnet, dass** das Schott (9) als gerade durchlaufende Platte ausgebildet ist, auf der die geschlitzt ausgebildeten Tropfenabscheiderprofile (3) aufsitzen.

10. Tropfenabscheideranordnung nach einem der vorangehenden Ansprüche, **dadurch gekennzeichnet, daß** sie eine Einrichtung zur Strömungsumlenkung aufweist, die als im und/oder benachbart zum Wannen-, Kappen- und/oder Seitenbereich (4, 7, 13) angeordneter Keil (8) ausgebildet ist.

11. Tropfenabscheideranordnung nach einem der vorangehenden Ansprüche, **dadurch gekennzeichnet, dass** sie eine Einrichtung zur Strömungsgeschwindigkeitsreduzierung aufweist, die als im und/oder benachbart zum Wannen-, Kappen- und/oder Seitenbereich (4, 7, 13) angeordnete Lochplatte (10) ausgebildet ist.

12. Tropfenabscheideranordnung nach Anspruch 10, **dadurch gekennzeichnet, dass** der Keil (8) an der Übergangsstelle zwischen dem Strömungskanal (1) und der Tropfenabscheideranordnung (2) angeordnet ist.

13. Tropfenabscheideranordnung nach Anspruch 11 oder 12, **dadurch gekennzeichnet, dass** die Lochplatte (10) an den Keil (8) angrenzend angeordnet ist.

14. Tropfenabscheideranordnung nach Anspruch 11 oder 13, **dadurch gekennzeichnet, dass** die Lochplatte (10) Löcher mit von unten nach oben zunehmendem Lochdurchmesser aufweist.

15. Tropfenabscheideranordnung nach einem der Ansprüche 11, 13 oder 14, **dadurch gekennzeichnet, dass** mehrere Lochplatten (10) übereinander angeordnet sind.

16. Tropfenabscheideranordnung nach einem der vorangehenden Ansprüche, **dadurch gekennzeichnet, dass** sich die Tropfenabscheiderprofile (3) bis zum Boden des Wannenbereiches (4) erstrecken.

## Claims

1. A droplet separator system (2) for the arrangement in or at a flow duct (1) for the separation of liquid and/or solid particles from the medium flowing in the flow duct (1), the droplet separator system comprising a frame (11) with a bottom plate, a cover plate and a trough area (4) at the lower frame end serving for the collection and discharge of liquids/solids, the trough area being arranged lower than the bottom wall of the flow duct (1), a cap area and a lateral area and a plurality of droplet separator profiles (3) arranged parallel with respect to one another and held by the frame (11) wherein the frame (11) includes at least one device for increasing the flow resistance which is formed as rib (9, 18) arranged in the trough area, **characterized in that** the rib (9, 18) is arranged in the droplet separator profile area and substantially blocks the intermediate spaces or ducts between the individual droplet separator profiles (3) in the lower area.

2. The droplet separator system according to claim 1, **characterized in that** the rib (9, 18) divides the trough area (4) into two compartments with separated exits (6).

3. The droplet separator system according to claim 1 or 2, **characterized in that** the rib (9, 18) is arranged in the downstream frame half.

4. The droplet separator system according to one of the preceding claims which includes droplet separator profiles (3) provided with capturing noses (14), **characterized in that** the trough area (4) has at least one exit (15) which is arranged behind the capturing noses (14) in flow direction.

5. The droplet separator system according to claim 4, **characterized in that** the exit (15) is arranged immediately behind the capturing noses (14).

6. The droplet separator system according to claim 2, 4 or 5, **characterized in that** the exit (15) located behind the rib (9, 18) in flow direction is arranged behind the capturing noses (14).

7. The droplet separator system according to one of the preceding claims, **characterized in that** the rib (18) is formed in a comb-like manner wherein the individual prongs (19) extend from below into the intermediate spaces between the droplet separator profiles and substantially block the same.

8. The droplet separator system according to one of the claims 1 to 6, **characterized in that** the rib (9) is formed by blocking members (17) for the droplet separator intermediate spaces which are mounted at the droplet separator profiles (3).

9. The droplet separator system according to one of the claims 1 to 6, **characterized in that** the rib (9) is formed as straight continuous plate on which the slotted droplet separator profiles (3) sit.

10. The droplet separator system according to one of the preceding claims, **characterized in that** it includes a device for deflecting the flow which is formed as wedge (8) arranged in and/or adjacent to the trough area, cap area and/or lateral area (4, 7, 13).

11. The droplet separator system according to one of the preceding claims, **characterized in that** it includes a device for reducing the flow velocity which is formed as perforated plate (10) arranged in and/or adjacent to the trough area, cap area and/or lateral area (4, 7, 13).

12. The droplet separator system according to claim 10, **characterized in that** the wedge (8) is arranged at the transition point between the flow duct (1) and the droplet separator system (2).

13. The droplet separator system according to claim 11 or 12, **characterized in that** the perforated plate (10) is arranged contiguous to the wedge (8).

14. The droplet separator system according to claim 11 or 13, **characterized in that** the perforated plate (10) includes holes with a hole diameter increasing from below to above.

15. The droplet separator system according to one of the claims 11, 13 or 14, **characterized in that** a plurality of perforated plates (10) are located one above the other.

16. The droplet separator system according to one of the preceding claims, **characterized in that** the droplet separator profiles (3) extend to the bottom of the trough area (4).

## Revendications

1. Aménagement séparateur de gouttes (2) pour aménagement dans ou sur un canal d'écoulement (1) pour séparer des particules liquides et/ou solides du milieu s'écoulant dans le canal d'écoulement (1), avec un cadre (11) ayant une plaque de fond, une plaque de recouvrement et une zone de cuve (4) servant à la collecte et à l'évacuation des liquides/solides à l'extrémité inférieure du cadre, qui est disposée plus bas que la paroi de fond du canal d'écoulement (1), une zone de coiffe, une zone latérale et une pluralité, maintenue par le cadre (11), de profilés séparateurs de gouttes (3) aménagés parallèlement l'un à l'autre, dans lequel le cadre (11) présente au moins un dispositif pour augmenter la résistance à l'écoulement, qui est conformé en cloison (9, 18), qui est aménagée dans la zone de cuve (4), **caractérisé en ce que** la cloison (9, 18) est aménagée dans la zone des profilés séparateurs de gouttes et bloque sensiblement les espaces intermédiaires ou les canaux entre les profilés séparateurs de gouttes (3) individuels dans la zone inférieure.

2. Aménagement séparateur de gouttes selon la revendication 1, **caractérisé en ce que** la cloison (9, 18) subdivise la zone de cuve (4) en deux compartiments ayant respectivement des évacuations séparées (6).

3. Aménagement séparateur de gouttes selon la revendication 1 ou 2, **caractérisé en ce que** la cloison (9, 18) est aménagée dans la moitié de cadre située en aval.

4. Aménagement séparateur de gouttes selon l'une quelconque des revendications précédentes, qui présente des profilés séparateurs de gouttes (3) équipés de tenons de capture (14), **caractérisé en ce que** la zone de cuve (4) présente au moins une évacuation (15), qui est aménagée dans le sens d'écoulement derrière les tenons de capture (14).

5. Aménagement séparateur de gouttes selon la revendication 4, **caractérisé en ce que** l'évacuation (15) est aménagée juste derrière les tenons de capture (14).

6. Aménagement séparateur de gouttes selon la revendication 2, 4 ou 5, **caractérisé en ce que** l'évacuation (15) prévue dans le sens d'écoulement après la cloison (9, 18) est aménagée derrière les tenons de capture (14).

7. Aménagement séparateur de gouttes selon l'une quelconque des revendications précédentes,
**caractérisé en ce que** la cloison (18) est conformée en peigne, dans lequel les dents de peigne (19) individuelles s'étendent d'en bas dans les espaces intermédiaires des profilés séparateurs de gouttes et bloquent sensiblement ceux-ci.

8. Aménagement séparateur de gouttes selon l'une quelconque des revendications 1 à 6, **caractérisé en ce que** la cloison (9) est formée d'éléments de blocage (17) appliqués sur les profilés séparateurs de gouttes (3) pour les espaces intermédiaires des profilés séparateurs de gouttes.

9. Aménagement séparateur de gouttes selon l'une quelconque des revendications 1 à 6, **caractérisé en ce que** la cloison (9) se présente sous la forme d'une plaque continue rectiligne et sur laquelle reposent les profilés séparateurs de gouttes (3) conformés à fentes.

10. Aménagement séparateur de gouttes selon l'une quelconque des revendications précédentes,
**caractérisé en ce qu'**il présente un dispositif de déviation d'écoulement, qui se présente sous la forme d'un coin (8) aménagé dans et/ou au voisinage de la zone de cuve, de la zone de coiffe et/ou de la zone latérale (4, 7, 13).

11. Aménagement séparateur de gouttes selon l'une quelconque des revendications précédentes,
**caractérisé en ce qu'**il présente un dispositif de réduction de vitesse d'écoulement, qui se présente sous la forme d'une plaque perforée (10) aménagée dans et/ou au voisinage de la zone de cuve, de la zone de coiffe et/ou de la zone latérale (4, 7, 13).

12. Aménagement séparateur de gouttes selon la revendication 10, **caractérisé en ce que** le coin (8) est disposé au point de transition situé entre le canal d'écoulement (1) et l'aménagement séparateur de gouttes (2).

13. Aménagement séparateur de gouttes selon la revendication 11 ou 12, **caractérisé en ce que** la plaque perforée (10) est aménagée en position attenante au coin (8).

14. Aménagement séparateur de gouttes selon la revendication 11 ou 13, **caractérisé en ce que** la plaque perforée (10) présente des trous d'un diamètre croissant de bas en haut.

15. Aménagement séparateur de gouttes selon l'une quelconque des revendications 11, 13 ou 14,
**caractérisé en ce que** l'on superpose plusieurs plaques perforées (10).

16. Aménagement séparateur de gouttes selon l'une quelconque des revendications précédentes,
**caractérisé en ce que** les profilés séparateurs de gouttes (3) s'étendent jusqu'au fond de la zone de cuve (4).
